# EUROPÄISCHE PATENTSCHRIFT

(11) **EP 3 894 719 B1**
(45) Veröffentlichungstag und Bekanntmachung des Hinweises auf die Patenterteilung: **29.03.2023**
(21) Anmeldenummer: 19828598.3
(22) Anmeldetag: 11.12.2019
(51) Int. Cl.: F16F 15/14, F16H 45/02

(54) **KUPPLUNGSANORDNUNG MIT EINEM GEHÄUSE UND MIT EINEM TILGERSYSTEM**
COUPLING ARRANGEMENT HAVING A HOUSING AND HAVING AN ABSORBER SYSTEM
ARRANGEMENT D'ACCOUPLEMENT COMPRENANT UN BOÎTIER ET COMPRENANT UN SYSTÈME AMORTISSEUR

(30) Priorität: 13.12.2018 DE 102018221613
(43) Veröffentlichungstag der Anmeldung: 20.10.2021
(73) Patentinhaber: ZF Friedrichshafen AG, 88046 Friedrichshafen (DE)
(72) Erfinder: BAUER, Thomas, 97633 Großbardorf (DE)
(86) Internationale Anmeldenummer: PCT/EP2019/084602
(87) Internationale Veröffentlichungsnummer: WO 2020/120552

(56) Entgegenhaltungen:
- WO-A1-2014/082629
- DE-A1- 10 005 544
- DE-A1- 10 005 548
- JP-A- 2017 020 583
- US-B1- 9 297 448

## Beschreibung

Die Erfindung betrifft eine Kupplungsanordnung mit einem Tilgersystem, das über einen Tilgermassenträger und zumindest eine relativ zum Tilgermassenträger auslenkbare Tilgermasse verfügt, und mit einem Gehäuse, das wenigstens zwei mittels einer Festverbindung dauerhaft miteinander verbundene Gehäuseteile aufweist, von denen zumindest ein Gehäuseteil eine Aussparung für wenigstens einen Vorsprung des jeweils anderen Gehäuseteils aufweist.

Eine derartige Kupplungsanordnung ist durch die DE 10 2012 219 738 A1 bekannt, die in Fig. 9 eine als hydrodynamischer Drehmomentwandler ausgebildete Kupplungsanordnung zeigt. Der über den Vorsprung verfügende Gehäuseteil ist zur Bildung eines hydrodynamischen Bauteils, wie eines Pumpenrades, vorgesehen, und umhüllt zudem das Tilgersystem radial. Der Vorsprung dieses Gehäuseteils greift mit seinem dem anderen Gehäuseteil zugewandten Ende in die Aussparung dieses Gehäuseteils ein, die im Umfangsbereich dieses Gehäuseteils an dessen radialer Innenseite vorgesehen ist. Vorsprung und Ausnehmung überlappen sich demnach sowohl radial als auch axial. Dieser Kontaktbereich der beiden Gehäuseteile wird durch eine Festverbindung in Form einer Verschweißung gesichert, wodurch die beiden Gehäuseteile dauerhaft miteinander verbunden sind.

Das Tilgersystem dieser Kupplungsanordnung weist einen Tilgermassenträger auf, der über zwei mit Axialabstand zueinander angeordnete Tilgermassenträgerelemente verfügt, die axial zwischen sich Tilgermassen aufnehmen. Eines dieser Tilgermassenträgerelemente ist im Übertragungsweg von Drehmomenten an einem Bauteil eines Torsionsschwingungsdämpfers befestigt. Liegen an diesem Bauteil des Torsionsschwingungsdämpfers starke Torsionsschwingungen infolge starker antriebsseitiger Anregungen an, dann führen die Tilgermassen erhebliche Auslenkbewegungen relativ zu Tilgermassenträger aus. Diese Auslenkbewegungen müssen zum Schutz der Anbindung der Tilgermassen am Tilgermassenträger mittels eines Anschlages begrenzt werden, der aufgrund der vorherrschenden Belastung robust ausgeführt werden muss.

Aus der EP 2 685 127 B1 ist ein Vibrationsdämpfer mit einem Torsionsschwingungsdämpfer und mit einem Tilgersystem bekannt. Während der Eingang des Torsionsschwingungsdämpfers mit einem Antrieb verbunden ist, greift der Ausgang des Torsionsschwingungsdämpfers drehfest an einem Tilgergehäuse an, das zur relativ bewegbaren Aufnahme von Tilgermassen vorgesehen ist. Das Tilgergehäuse steht über eine Rutschkupplung mit einer Abtriebsnabe in Wirkverbindung, wobei diese Abtriebsnabe drehfest auf einer Getriebeeingangswelle angeordnet ist. Die Aufgabe der Rutschkupplung liegt in einer Begrenzung des auf die Getriebeeingangswelle geleiteten Drehmomentes. Hierzu wird, sollte der Antrieb zu hohe Drehmomente in den Vibrationsdämpfer einleiten, eine Axialfeder, die durch Anordnung zwischen dem Tilgergehäuse und der Abtriebsnabe für den Aufbau einer Haftreibung sorgt, eine Relativbewegung zwischen dem Tilgergehäuse und der Abtriebsnabe zulassen, und dadurch eine Weiterleitung des jeweiligen Drehmomentüberschusses an die Getriebeeingangswelle verhindern.

Aus der WO 2014/082629 A1 ist eineDrehmomentübertragungseinrichtung, für einen Antriebsstrang eines Fahrzeugs, mit einem Rotationsteil, insbesondere einem mindestens eine Schwungmasse aufweisenden Schwungrad, mindestens einem Fliehkraftpendel, das mindestens eine Pendelmasse und mindestens eine diese Pendelmasse tragende Tragereinrichtung aufweist, sowie einer Lagereinrichtung zur Lagerung des Fliehkraftpendels am Rotationsteil bekannt.

Der Erfindung liegt die Aufgabe zugrunde, eine Kupplungsanordnung mit einem Gehäuse und mit einem Tilgersystem so auszubilden, dass Relativbewegungen von Tilgermassen des Tilgersystems gegenüber einem Tilgermassenträger des Tilgersystems mit geringem technischen Aufwand wirksam begrenzt werden können.

Zur Lösung dieser Aufgabe ist eine Kupplungsanordnung vorgesehen mit einem Tilgersystem, das über einen Tilgermassenträger und zumindest eine relativ zum Tilgermassenträger auslenkbare Tilgermasse verfügt, und mit einem Gehäuse, das wenigstens zwei mittels einer Festverbindung dauerhaft miteinander verbundene Gehäuseteile aufweist, von denen zumindest ein Gehäuseteil eine Aussparung für wenigstens einen Vorsprung des jeweils anderen Gehäuseteils aufweist.

Von besonderer Bedeutung ist hierbei, dass die wenigstens zwei Gehäuseteile unter Aufnahme des Tilgermassenträgers zwischen der Aussparung des einen Gehäuseteils und dem Vorsprung des anderen Gehäuseteils zusammengefügt werden, und zwar derart, dass die Gehäuseteile im Verlauf der Erzeugung der Festverbindung durch eine die Gehäuseteile in voneinander fortweisender Richtung beaufschlagende Spannvorrichtung belastet sind, die axial zwischen einem der Gehäuseteile und dem Tilgermassenträger wirksam ist, der am jeweils anderen Gehäuseteil axial abgestützt ist.

Da die Spannvorrichtung derart wirkt, dass die wenigstens zwei Gehäuseteile in voneinander fortweisender Richtung beaufschlagt sind, steht die Spannvorrichtung aufgrund der Festverbindung zwischen den wenigstens zwei Gehäuseteilen dauerhaft unter Vorspannung, wobei diese Festverbindung vorzugsweise mittels einer Schweißnaht erfolgt. Aufgrund der Wirkung der Spannvorrichtung zwischen einem der Gehäuseteile und dem Tilgermassenträger wird der Tilgermassenträger in Richtung zum jeweils anderen Gehäuseteil beaufschlagt, an welchem die axiale Abstützung des Tilgermassenträgers erfolgt. Wegen der bei dieser Abstützung wirksamen Haftreibung zwischen dem Tilgermassenträger und der Anlagefläche des entsprechenden Gehäuseteils wird eine Mitnahme des Tilgermassenträgers durch den Gehäuseteil bei Bewegungen desselben um eine Zentralachse veranlasst. Dies gilt allerdings nur bis zum Erreichen der Haftgrenze zwischen dem Tilgermassenträger und der Anlagefläche des entsprechenden Gehäuseteils. Werden somit Drehmomentstöße auf den Gehäuseteil geleitet, welche aufgrund einer Überschreitung der Haftgrenze zwischen dem Tilgermassenträger und der Anlagefläche des entsprechenden Gehäuseteils eine Relativbewegung des Gehäuseteils gegenüber dem Tilgermassenträger auslösen, dann werden die durch diese Drehmomentstöße eingeleiteten Drehmomentüberschüsse aufgrund der besagten Relativbewegung von einer Übertragung auf den Tilgermassenträger abgehalten. Hierdurch ergibt sich folgender Vorteil:
Bei Einleitung eines Drehmomentstoßes werden die Tilgermassen relativ zum Tilgermassenträger ausgelenkt. Zur Begrenzung der Auslenkweite der Tilgermassen relativ zum Tilgermassenträger verfügen Tilgersysteme üblicherweise über eine Anschlagvorrichtung, an welchem die Tilgermassen bei Erreichen einer vorbestimmten Auslenkweite zur Anlage gelangen, wobei die Belastung der Anschlagvorrichtung sowie der Tilgermassen mit zunehmender Stärke des Drehmomentstoßes ansteigt.

Da die Anschlagvorrichtung zugunsten geringer Anschlaggeräusche üblicherweise aus einem Material besteht, das deutlich weicher als das Material der Tilgermassen ist, können Schäden insbesondere an der Anschlagvorrichtung nicht ausgeschlossen werden, wenn die eingeleiteten Drehmomentstöße bestimmte Werte übersteigen. Sofern in diesen Fällen der Tilgermassenträger eine Relativbewegung gegenüber dem zugeordneten Gehäuseteil vornehmen kann, gelangen nur Drehmomente oder Drehmomentstöße bis zu einem vorbestimmten Grenzwert, der durch die Haftgrenze zwischen Tilgermassenträger und zugeordnetem Gehäuseteil bestimmt ist, auf den Tilgermassenträger. Dadurch wird die Auslenkung der Tilgermassen relativ zum Tilgermassenträger begrenzt, und auf diese Weise die Anschlagvorrichtung vor Schäden bewahrt.

Zur Erzielung dieser Wirkungsweise ist die Kupplungsanordnung mit besonderem Vorzug mit einem Gehäuse versehen, bei welchem sowohl die Aussparung für den Vorsprung als auch der Vorsprung selbst jeweils im radialen Außenbereich des Gehäuses und jeweils an einem dem jeweils anderen Gehäuseteil zugewandten axialen Ende eines Gehäuseteils vorgesehen ist, wobei der den Vorsprung aufweisende Gehäuseteil an der radialen Innenseite des die Aussparung aufweisenden Gehäuseteils in Anlage kommt. Der Tilgermassenträger kann hierbei mit einem einzelnen Tilgermassenträgerelement ausgebildet sein, oder aber mit einer Mehrzahl von Tilgermassenträgerelementen. Bei Eingriff des Tilgermassenträgers in die Aussparung des dieselbe aufweisenden Gehäuseteils stützen sich das Tilgermassenträgerelement oder die Tilgermassenträgerelemente des Tilgermassenträgers mit einer jeweils dem Vorsprung des anderen Gehäuseteils zugewandten Seite an diesem Vorsprung und/oder mit einer von dem Vorsprung abgewandten Seite an einer der Aussparung zugeordneten Axialsicherung ab, während die Beaufschlagung des jeweiligen Tilgermassenträgerelementes durch die Spannvorrichtung an der von der Abstützstelle jeweils abgewandten Seite erfolgt. Im Einzelnen können sich hierdurch folgende Konstellationen ergeben:
Verfügt der Tilgermassenträger beispielsweise über eine Mehrzahl von Tilgermassenträgerelementen, die in die Aussparung des dieselbe aufweisenden Gehäuseteils eingreifen, dann liegt eine vorteilhafte Ausführung darin, dass ein Tilgermassenträgerelement an der der Aussparung des einen Gehäuseteils zugeordneten Axialsicherung abgestützt ist, und ein weiteres Tilgermassenträgerelement an dem Vorsprung des anderen Gehäuseteils, während die von der Axialsicherung abgewandte Seite des einen Tilgermassenträgerelementes sowie die vom Vorsprung abgewandte Seite des weiteren Tilgermassenträgerelementes jeweils durch die Spannvorrichtung beaufschlagt ist, die sich axial zwischen den beiden Tilgermassenträgerelementen befindet. Eine andere vorteilhafte Ausführung liegt dagegen vor, wenn ein erstes Tilgermassenträgerelement an der Axialsicherung dieser Aussparung abgestützt ist, und ein weiteres Tilgermassenträgerelement an dem ersten Tilgermassenträgerelement, während die von dem ersten Tilgermassenträgerelement abgewandte Seite des zweiten Tilgermassenträgerelementes durch die Spannvorrichtung beaufschlagt ist, die an dem Vorsprung des anderen Gehäuseteils abgestützt ist. Bei beiden Ausführungen ist es von Vorteil, wenn zumindest die beiden vorgenannten Tilgermassenträgerelemente radial über die zumindest eine Tilgermasse hinausragen, und zumindest eines dieser Tilgermassenträgerelemente an seiner radialen Außenseite eine Kröpfung auf das jeweils andere Tilgermassenträgerelement zu aufweist.

Verfügt der Tilgermassenträger dagegen lediglich über ein Tilgermassenträgerelement, das in die Aussparung des dieselbe aufweisenden Gehäuseteils eingreift, dann liegt eine vorteilhafte Ausführung darin, die Spannvorrichtung an der der Aussparung des einen Gehäuseteils zugeordneten Axialsicherung abzustützen, und das Tilgermassenträgerelement an dessen von dem Vorsprung des anderen Gehäuseteils abgewandter Seite zu beaufschlagen, während das Tilgermassenträgerelement mit seiner diesem Vorsprung zugewandter Seite an diesem Vorsprung abgestützt ist. Eine andere vorteilhafte Ausführung liegt dagegen vor, wenn das Tilgermassenträgerelement an der der Aussparung des einen Gehäuseteils zugeordneten Axialsicherung abgestützt ist, und durch die Spannvorrichtung beaufschlagt ist, die am Vorsprung des anderen Gehäuseteils abgestützt ist.

Unabhängig von diesen Ausführungen liegt eine vorteilhafte Ausführung für die Spannvorrichtung vor, wenn diese über eine Energiespeichereinrichtung mit zumindest einem Energiespeicher verfügt. Weist dieser Energiespeicher zumindest eine Tellerfeder oder zumindest eine Wellfeder auf, dann lässt sich bei einfacher konstruktiver Ausgestaltung eine kompakte Bauweise realisieren. Alternativ kann der zumindest eine Energiespeicher aber auch an einer Energiespeichereinrichtung mit in Axialabstand zueinander angeordneten Energiespeicherträgerelementen realisiert sein, wobei er axial zwischen den Energiespeicherträgern aufgenommen ist. Dieser Energiespeicher kann in vorteilhafter Ausgestaltung als Schraubendruckfeder ausgebildet sein. Ist dagegen axial zwischen den Energiespeicherträgern eine Mehrzahl an Energiespeichern in Form von Schraubendruckfedern vorgesehen, dann sind diese zumindest im Wesentlichen mit gleichen Abständen in Umfangsrichtung zueinander angeordnet.

Nachfolgend ist die Kupplungsanordnung anhand einer Zeichnung näher erläutert. Es zeigt:

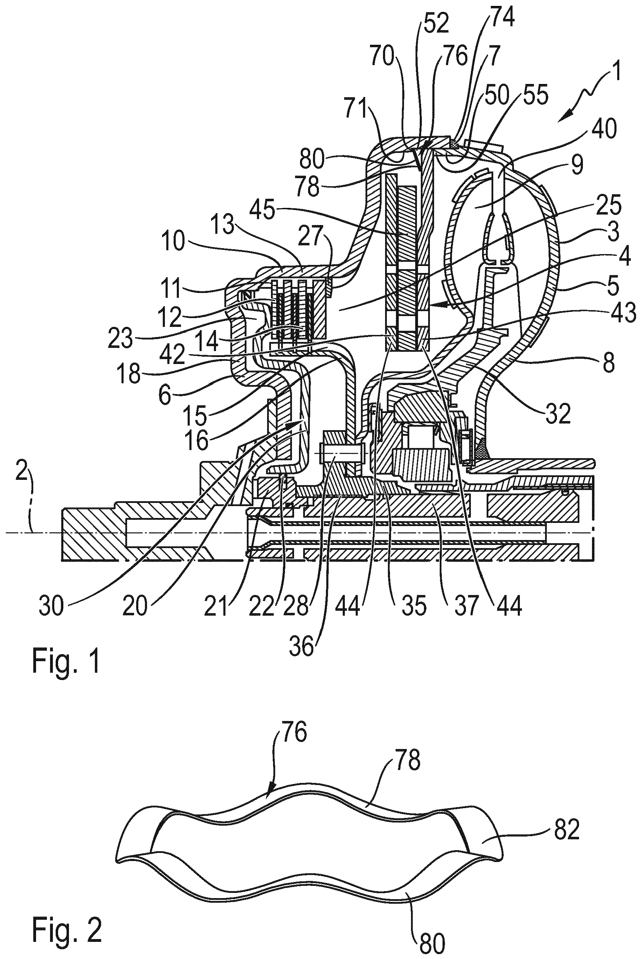

Fig. 1 Einen Schnitt durch eine Kupplungsanordnung mit einem Tilgersystem in einem zweiteiligen Gehäuse, wobei das Tilgersystem einen Tilgermassenträger mit zwei Tilgermassenträgerelementen aufweist, die mit Axialversatz zueinander angeordnet sind, und von denen eines über axial zwischen den Tilgermassenträgerelementen aufgenommene Tilgermassen radial hinausgeführt, in einer Aussparung eines Gehäuseteils aufgenommen und durch eine in der Aussparung dieses Gehäuseteils angeordnete und an einer Axialsicherung dieses Gehäuseteils abgestützte Energiespeichereinrichtung einer Spannvorrichtung an einer Axialseite belastet ist;
Fig. 2 eine Wellfeder als Energiespeicher der in Fig. 1 gezeigten Energiespeichereinrichtung;
Fig. 3 wie Fig. 2, aber mit einer Tellerfeder als Energiespeicher der Energiespeichereinrichtung;
Fig. 4 wie Fig. 2, aber mit einem Tellerfederpaket als Energiespeicher der Energiespeichereinrichtung;
Fig. 5 wie Fig. 1, aber mit einer Energiespeichereinrichtung, die an einem Vorsprung des anderen Gehäuseteils abgestützt ist, und das in der Aussparung dieses Gehäuseteils angeordnete Tilgermassenträgerelement an der gegenüberliegenden Axialseite belastet ist;
Fig. 6 wie Fig. 1, aber mit einem Tilgermassenträger, bei welchem beide Tilgermassenträgerelemente über die Tilgermassen radial hinausgeführt und in der Aussparung eines Gehäuseteils aufgenommen sind, und mit einer Energiespeichereinrichtung, die an einem Vorsprung des anderen Gehäuseteils abgestützt ist, und das in der Aussparung dieses Gehäuseteils angeordnete benachbarte Tilgermassenträgerelement an der dem Vorsprung zugewandten Axialseite belastet;
Fig. 7 wie Fig. 6, aber mit einer Energiespeichereinrichtung, die zwischen den beiden Tilgermassenträgerelementen angeordnet ist und sich jeweils an den einander zugewandten Axialseiten der Tilgermassenträgerelemente abstützt;
Fig. 8 eine Energiespeichereinrichtung mit in Axialabstand zueinander angeordneten Energiespeicherträgerelementen, welche axial zwischen sich Energiespeicher aufnehmen, die jeweils als Schraubendruckfeder ausgebildet ist;
Fig. 9 eine Herauszeichnung einer als Energiespeicher wirksamen Schraubendruckfeder sowie eines Umfangsausschnittes der Energiespeicherträgerelemente der Energiespeichereinrichtung.

Fig. 1 zeigt eine Kupplungsanordnung 1, die in nicht dargestellter Weise mit einem Antrieb, wie beispielsweise mit der Kurbelwelle einer Brennkraftmaschine verbunden sein soll. Die Kupplungsanordnung 1 verfügt über ein Gehäuse 3, bestehend aus einem nachfolgend als erster Gehäuseteil 5 bezeichneten Hauptgehäuseteil und einem nachfolgend als zweiter Gehäuseteil 6 bezeichneten Gehäusedeckel. Die beiden Gehäuseteile 5 und 6 verfügen über eine Festverbindung 74 zueinander, gebildet mittels einer Schweißnaht 7, und sind zu einer Rotationsbewegung um eine Zentralachse 2 befähigt. Der erste Gehäuseteil 5 dient zur Ausbildung einer Pumpe 8, die ebenso wie eine Turbine 9 und ein Leitrad 32 jeweils Bestandteile eines hydrodynamischen Kreises 40 sind. Das Gehäuse 3 ist zumindest teilweise mit fluidförmigem Medium befüllt.

Der zweite Gehäuseteil 6 weist an der radialen Innenseite 71 seines Umfangs eine Aussparung 52 in Form einer umlaufenden Radialvertiefung auf, wobei diese Aussparung 52 als Aufnahmebereich für ein Tilgermassenträgerelement 43 eines Tilgermassenträgers 44 dient. Das Tilgermassenträgerelement 43 ist mit Axialabstand zu einem weiteren Tilgermassenträgerelement 42 des Tilgermassenträgers 44 angeordnet, wobei die beiden Tilgermassenträgerelemente 42 und 43 axial zwischen sich Tilgermassen 45 relativ bewegbar aufnehmen. Das Tilgermassenträgerelement 43 ragt zur Aufnahme in der Aussparung 52 des zweiten Gehäuseteils 6 radial weiter nach außen als das Tilgermassenträgerelement 42. Die Tilgermassenträgerelemente 42 und 43 sind ebenso wie die Tilgermassen 45 Teil eines Tilgersystems 4.

Die Aussparung 52 ist an ihrer vom hydrodynamischen Kreis 40 abgewandten Seite mit einem als Axialanschlag 70 dienenden Radialübergang ausgebildet, der als Aussparungsbegrenzung dient. An diesem Axialanschlag 70 stützt sich ein in Fig. 2 als Einzelheit herausgezeichneter, als Wellfeder 82 ausgebildeter Energiespeicher 80 einer Energiespeichereinrichtung 78 einer Spannvorrichtung 76 axial ab, und beaufschlagt mit seiner Gegenseite das Tilgermassenträgerelement 43. Dieses stützt sich mit seiner Gegenseite am freien Ende 55 eines Vorsprunges 50 des ersten Gehäuseteils 5 axial ab. Durch die Beaufschlagung mittels der Energiespeichereinrichtung 78 wird das Tilgermassenträgerelement 43 reibschlüssig am ersten Gehäuseteil 5 in Anlage gehalten, solange in Umfangsrichtung wirksame Drehmomente oder Drehmomentstöße unterhalb der Wirkung der durch die Energiespeichereinrichtung 78 erzeugten Reibkraft verbleiben. Wachsen die in Umfangsrichtung wirksamen Drehmomente oder Drehmomentstöße allerdings so stark an, dass diese den durch die Energiespeichereinrichtung 78 erzeugten Reibschluss übersteigen, dann rutscht der Tilgermassenträger 44 gegenüber dem Gehäuse 3 der Kupplungsanordnung 1 durch, und begrenzt dadurch mittels einer Begrenzung der wirksamen Drehmomente oder Drehmomentstöße die Relativauslenkung der Tilgermassen 45 gegenüber dem Tilgermassenträger 44. Dadurch wird das Tilgersystem 4 wirkungsvoll vor einer Schädigung durch Überlast bewahrt. Für die Herstellung des Gehäuses 3 wird das Tilgersystem 4 unter der Wirkung der Spannvorrichtung 76 in die in Fig. 1 gezeigte Position relativ zum Gehäuse 3 gebracht, in welcher das radial größere Tilgermassenträgerelement 43 in die Aussparung 52 des zweiten Gehäuseteils 6 eingreift. Der Vorsprung 50 kommt mit seinem freien Ende 55 an dem Tilgermassenträgerelement 43 axial in Anlage. Danach werden die beiden Gehäuseteile 5 und 6 in Verlaufsrichtung der Zentralachse 2 gegeneinander ausgerichtet und die Festverbindung 74 gebildet. Dabei bleibt die Vorspannung des Energiespeichers 80 der Spannvorrichtung 76 erhalten.

Wie Fig. 1 weiter zeigt, ist der zweite Gehäuseteil 6 in einem zumindest im Wesentlichen axial verlaufenden Radialbereich 10 mit einer Innenverzahnung 11 ausgebildet, über welche antriebsseitige Kupplungselemente 12 drehfest aufgenommen sind. Der Radialbereich 10 ist demnach als Außenkupplungselemententräger 13 wirksam. Axial benachbart zu den antriebsseitigen Kupplungselementen 12 sind abtriebsseitige Kupplungselemente 14 vorgesehen, die in einer Außenverzahnung 15 eines Innenkupplungselemententrägers 16 drehfest aufgenommen sind.

Axial zwischen einer sich zumindest im Wesentlichen radial erstreckenden Gehäusewandung 18 des zweiten Gehäuseteils 6 und dem derselben nächstliegenden antriebsseitigen Kupplungselement 12 ist ein Kupplungskolben 20 vorgesehen, der auf einer Gehäusenabe 21 axial verschiebbar und mittels einer Abdichtung 22 druckdicht aufgenommen ist. Der Kupplungskolben 20 bildet zusammen mit dem Außenkupplungselemententräger 13, den Kupplungselementen 12 und 14 sowie dem Innenkupplungselemententräger 16 eine Kupplungseinrichtung 30.

Zwischen der Gehäusewandung 18 und der derselben zugewandten Seite des Kupplungskolbens 20 ist ein Druckraum 23 vorgesehen. An die Gegenseite des Kupplungskolbens 20 grenzt dagegen ein Kühlraum 25 an, in welchem die Kupplungselemente 12 und 14 sowie der Innenkupplungselemententräger 16 der Kupplungseinrichtung 30 ebenso aufgenommen sind wie das Tilgersystem 4 und der hydrodynamische Kreis 40.

Durch einen Überdruck im Druckraum 23 gegenüber dem Kühlraum 25 wird der Kupplungskolben 20 in Richtung zu den Kupplungselementen 12 und 14 verlagert, die sich mit ihren von dem Kupplungskolben 20 abgewandten Seiten über eine Axialbegrenzung 27 am zweiten Gehäuseteil 6 axial abstützen. Der in dieser Weise ausgelenkte Kupplungskolben 20 versetzt also die Kupplungselemente 12 und 14 in Reibverbindung miteinander, die Kupplungseinrichtung 30 ist eingerückt. Im Gegensatz dazu wird ein Überdruck im Kühlraum 25 gegenüber dem Druckraum 23 dazu führen, dass der Kupplungskolben 20 in von den Kupplungselementen 12 und 14 fortweisender Richtung verlagert wird, so dass die Reibverbindung zwischen den Kupplungselementen 12 und 14 zumindest reduziert und die Kupplungseinrichtung 30 ausgerückt wird.

Der Innenkupplungselemententräger 16 ist mittels einer Vernietung 28 ebenso wie die Turbine 9 mit einer Abtriebsnabe 35 verbunden, die über eine Verzahnung mit einer Getriebeeingangswelle 36 drehfest verbunden ist.

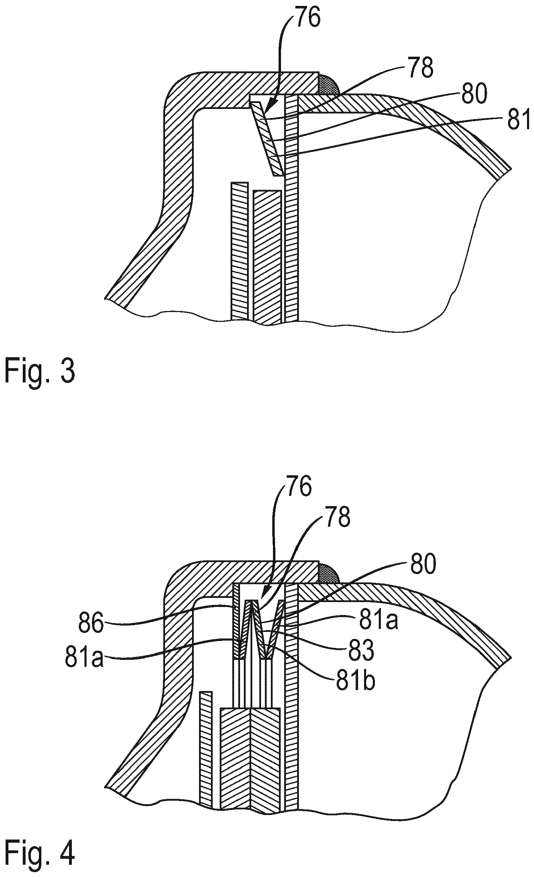

Anstelle der in Fig. 1 dargestellten Wellfeder 82 kann als Energiespeicher 80 auch eine in Fig. 3 gezeigte einzelne Tellerfeder 81 oder ein in Fig. 4 gezeigtes Tellerfederpaket 83 vorgesehen sein, wobei das letztgenannte unterschiedlich ausgerichtete Tellerfedern 81a, 81b aufweisen kann. Wenn die am weitesten vom Tilgermassenträgerelement 43 abgewandte Tellerfeder 81a so ausgerichtet ist, dass sie am Axialanschlag 70 nicht zur Anlage gelangen würde, kann zwischen denselben und der Tellerfeder 81a auch ein Energiespeicherträgerelement 86 vorgesehen sein, an welchem sich die Tellerfeder 81a axial abstützt, und das seinerseits an dem Axialanschlag 70 zur axialen Abstützung gelangt.

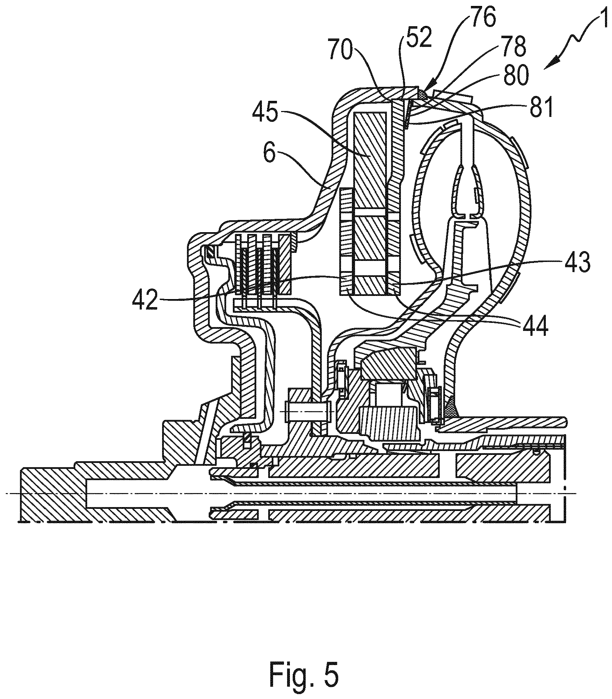

Auch bei der in Fig. 5 gezeigten Kupplungsanordnung 1 dient die Aussparung 52 des zweiten Gehäuseteils 6 zur Aufnahme des Tilgermassenträgerelementes 43 des Tilgermassenträgers 44, das hierzu radial weiter nach außen ragt als das Tilgermassenträgerelement 42. Die Aussparung 52 ist mit dem Axialanschlag 70 zur axialen Abstützung des Tilgermassenträgerelementes 43 vorgesehen, wobei das Tilgermassenträgerelement 43 durch einen Energiespeicher 80 der Energiespeichereinrichtung 78 der Spannvorrichtung 76, vorzugsweise in Form einer Tellerfeder 81, gegen den Axialanschlag 70 gepresst und dadurch reibschlüssig am zweiten Gehäuseteil 6 in Anlage gehalten wird, solange in Umfangsrichtung wirksame Drehmomente oder Drehmomentstöße unterhalb der Wirkung der durch die Energiespeichereinrichtung 78 erzeugten Reibkraft verbleiben. Wachsen die in Umfangsrichtung wirksamen Drehmomente oder Drehmomentstöße allerdings so stark an, dass diese den durch die Energiespeichereinrichtung 78 erzeugten Reibschluss übersteigen, dann rutscht der Tilgermassenträger 44 gegenüber dem Gehäuse 3 der Kupplungsanordnung 1 durch, und begrenzt dadurch mittels einer Begrenzung der wirksamen Drehmomente oder Drehmomentstöße die Relativauslenkung der Tilgermassen 45 gegenüber dem Tilgermassenträger 44.

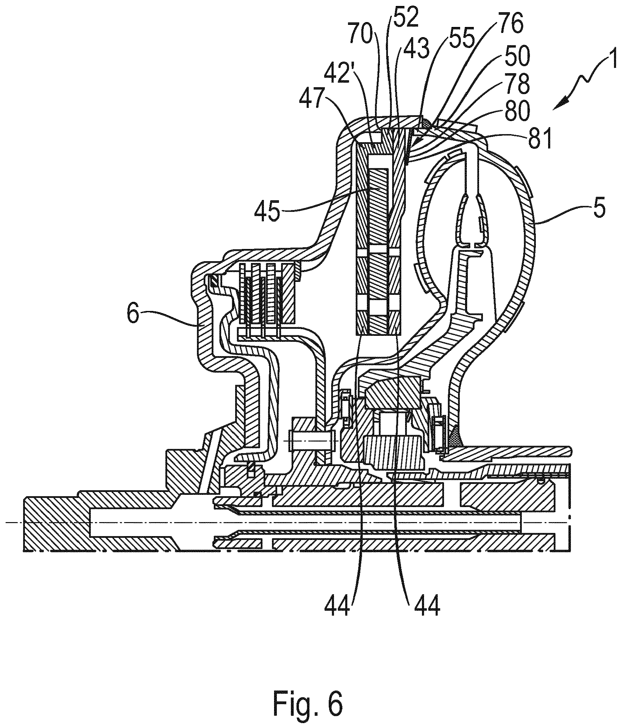

Die in Fig. 6 gezeigte Kupplungsanordnung 1 entspricht im Wesentlichen der in Fig. 5 dargestellten Kupplungsanordnung 1, lässt aber zur Aufnahme des Tilgermassenträgers 44 beide Tilgermassenträgerelemente 42` und 43 in die Aussparung 52 des zweiten Gehäuseteils 6 eingreifen. Das somit radial nach außen verlängerte Tilgermassenträgerelement 42` ist in seinem Erstreckungsbereich radial außerhalb der Tilgermassen 45 mittels einer Kröpfung 47 auf das andere Tilgermassenträgerelement 43 zugerichtet, um im Bereich seines Außenumfangs zumindest im Wesentlichen parallel zum Tilgermassenträgerelement 43 in die Aussparung 52 einzudringen. Während sich das eine Tilgermassenträgerelement 42' am Axialanschlag 70 der Aussparung 52 axial abstützt, kommt das andere Tilgermassenträgerelement 43 unter der Wirkung des Energiespeichers 80 der Energiespeichereinrichtung 78 der Spannvorrichtung 76 an dem erstgenannten Tilgermassenträgerelement 42' axial zur Anlage, wobei der vorzugsweise als Tellerfeder 81 ausgebildete Energiespeicher 80 sich einerseits an der von dem Tilgermassenträgerelement 42' abgewandten Seite des Tilgermassenträgerelementes 43 abstützt, und andererseits an dem freien Ende 55 des Vorsprunges 50 des ersten Gehäuseteils 5. Durch den Energiespeicher 80 der Energiespeichereinrichtung 78 werden die Tilgermassenträgerelemente 42` und 43 des Tilgermassenträgers 44 reibschlüssig am zweiten Gehäuseteil 6 in Anlage gehalten, solange in Umfangsrichtung wirksame Drehmomente oder Drehmomentstöße unterhalb der Wirkung der durch die Energiespeichereinrichtung 78 erzeugten Reibkraft verbleiben. Wachsen die in Umfangsrichtung wirksamen Drehmomente oder Drehmomentstöße allerdings so stark an, dass diese den durch die Energiespeichereinrichtung 78 erzeugten Reibschluss übersteigen, dann rutscht der Tilgermassenträger 44 gegenüber dem Gehäuse 3 der Kupplungsanordnung 1 durch, und begrenzt dadurch mittels einer Begrenzung der wirksamen Drehmomente oder Drehmomentstöße die Relativauslenkung der Tilgermassen 45 gegenüber dem Tilgermassenträger 44.

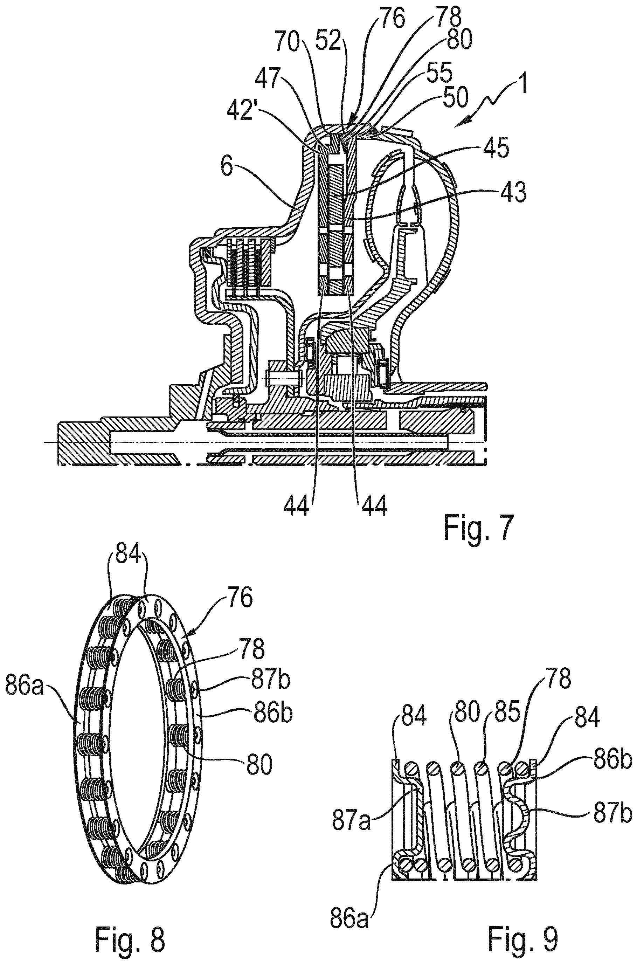

Auch bei der in Fig. 7 gezeigten Kupplungsanordnung 1 sind beide Tilgermassenträgerelemente 42' und 43 des Tilgermassenträgers 44 zum Eingriff in die Aussparung 52 des zweiten Gehäuseteils 6 bestimmt, wofür das radial nach außen verlängerte Tilgermassenträgerelement 42' in seinem Erstreckungsbereich radial außerhalb der Tilgermassen 45 mittels einer Kröpfung 47 auf das andere Tilgermassenträgerelement 43 zugerichtet ist, um im Bereich seines Außenumfangs zumindest im Wesentlichen parallel zum Tilgermassenträgerelement 43 in die Aussparung 52 einzudringen. Während sich das eine Tilgermassenträgerelement 42' am Axialanschlag 70 der Aussparung 52 axial abstützt, kommt das andere Tilgermassenträgerelement 43 unter der Wirkung des Energiespeichers 80 der Energiespeichereinrichtung 78 der Spannvorrichtung 76 an dem freien Ende 55 des Vorsprunges 50 des ersten Gehäuseteils 5 axial in Anlage. Der Energiespeicher 80 der Energiespeichereinrichtung 78 ist indes axial zwischen den beiden Tilgermassenträgerelementen 42' und 43 angeordnet, und bewirkt damit eine Axialbelastung der Tilgermassenträgerelemente 42` und 43 in voneinander fortweisender Richtung auf die jeweilige Abstützung in Form des Axialanschlages 70 einerseits und des freien Endes 55 des Vorsprunges 50 andererseits zu. Durch den Energiespeicher 80 der Energiespeichereinrichtung 78 wird das Tilgermassenträgerelement 42' reibschlüssig am zweiten Gehäuseteil 6 in Anlage gehalten und das Tilgermassenträgerelement 43 reibschlüssig am ersten Gehäuseteil 5, solange in Umfangsrichtung wirksame Drehmomente oder Drehmomentstöße unterhalb der Wirkung der durch die Energiespeichereinrichtung 78 erzeugten Reibkraft verbleiben. Wachsen die in Umfangsrichtung wirksamen Drehmomente oder Drehmomentstöße allerdings so stark an, dass diese den durch die Energiespeichereinrichtung 78 erzeugten Reibschluss übersteigen, dann rutscht der Tilgermassenträger 44 gegenüber dem Gehäuse 3 der Kupplungsanordnung 1 durch, und begrenzt dadurch mittels einer Begrenzung der wirksamen Drehmomente oder Drehmomentstöße die Relativauslenkung der Tilgermassen 45 gegenüber dem Tilgermassenträger 44.

Die Fig. 8 zeigt eine alternative Energiespeichereinrichtung 78 der Spannvorrichtung 76. Mit axialem Abstand zueinander sind zur Bildung eines Energiespeicherträgers 84 zwei Energiespeicherträgerelemente 86a, 86b vorgesehen, von denen das eine Energiespeicherträgerelement 86a unter der Wirkung von Energiespeichern 80 der Energiespeichereinrichtung 78 am ersten Tilgermassenträgerelement 42` reibschlüssig in Anlage gehalten ist, und das andere Energiespeicherträgerelement 86b unter der Wirkung der Energiespeicher 80 der Energiespeichereinrichtung 78 am zweiten Tilgermassenträgerelement 43. In Fig. 9, die ein Umfangssegment des Energiespeicherträgers 84 abbildet, ist gezeigt, wie die Energiespeicherträgerelemente 86a, 86b im Umfangsbereich jeweils eines als Schraubendruckfeder 85 ausgebildeten Energiespeichers 80 und in axialer Zuwendung zu diesem Energiespeicher 80 jeweils über Axialverformungen 87a, 87b verfügt, mit denen das jeweilige Energiespeicherträgerelement 86a, 86b den zugeordneten Energiespeicher 80 in Axialrichtung sowie in Umfangsrichtung positioniert.

Diese Energiespeichereinrichtung 78 kann beispielsweise anstelle der in Fig. 7 eingezeichneten Tellerfeder 81 zur Verwendung gelangen. Aufgrund der Verwendung von Schraubendruckfedern 85 kann - im Vergleich mit einer Tellerfeder 81 - eine feinfühligere Federcharakteristik erzielt werden. Selbstverständlich kann diese Energiespeichereinrichtung 78 auch bei den anderen behandelten Kupplungsanordnungen 1 eingesetzt werden.

### Bezuaszeichen

- 1: Kupplungsanordnung
- 2: Zentralachse
- 3: Gehäuse
- 4: Tilgersystem
- 5: erster Gehäuseteil
- 6: zweiter Gehäuseteil
- 7: Schweißnaht
- 8: Pumpe
- 9: Turbine
- 10: Radialbereich
- 11: Innenverzahnung
- 12: antriebsseitige Kupplungselemente
- 13: Außenkupplungselemententräger
- 14: abtriebsseitige Kupplungselemente
- 15: Außenverzahnung
- 16: Innenkupplungselemententräger
- 18: Gehäusewandung
- 20: Kupplungskolben
- 21: Gehäusenabe
- 22: Abdichtung
- 23: Druckraum
- 25: Kühlraum
- 27: Axialbegrenzung
- 28: Vernietung
- 30: Kupplungseinrichtung
- 32: Leitrad
- 35: Abtriebsnabe
- 36: Verzahnung
- 37: Getriebeeingangswelle
- 40: hydrodynamischer Kreis
- 42: Tilgermassenträgerelement
- 43: Tilgermassenträgerelement
- 44: Tilgermassenträger
- 45: Tilgermassen
- 46: Radialüberstand
- 47: Kröpfung
- 48: Polygon
- 49: Polygonbereiche
- 50: Vorsprung
- 52: Aussparung
- 55: freies Ende des Vorsprungs
- 70: Axialanschlag
- 71: radiale Innenseite Gehäuseteil
- 74: Festverbindung
- 76: Spanneinrichtung
- 80: Energiespeichereinrichtung
- 80: Energiespeicher
- 81: Tellerfeder
- 82: Wellfeder
- 83: Tellerfederpaket
- 84: Energiespeicherträger
- 85: Schraubendruckfeder
- 86: Energiespeicherträgerelement
- 87: Axialverformungen

## Patentansprüche

1. Kupplungsanordnung (1) mit einem Tilgersystem (2), das über einen Tilgermassenträger (44) und zumindest eine relativ zum Tilgermassenträger (44) auslenkbare Tilgermasse (45) verfügt, und mit einem Gehäuse (3), das wenigstens zwei mittels einer Festverbindung (74) dauerhaft miteinander verbundene Gehäuseteile (5, 6) aufweist, von denen zumindest ein Gehäuseteil (6) eine Aussparung (52) für wenigstens einen Vorsprung (50) des jeweils anderen Gehäuseteils (5) aufweist, **dadurch gekennzeichnet, dass** die wenigstens zwei Gehäuseteile (5, 6) unter Aufnahme des Tilgermassenträgers (44) zwischen einem Axialanschlag (70) der Aussparung (52) des einen Gehäuseteils (6) und dem Vorsprung (50) des anderen Gehäuseteils (5) zusammengefügt werden, und zwar derart, dass die Gehäuseteile (5, 6) im Verlauf der Erzeugung der Festverbindung (74) durch eine die Gehäuseteile (5, 6) in voneinander fortweisender Richtung beaufschlagende Spannvorrichtung (76) belastet sind, die axial zwischen einem der Gehäuseteile (5, 6) und dem Tilgermassenträger (44) wirksam ist, der am jeweils anderen Gehäuseteil (5, 6) axial abgestützt ist.

2. Kupplungsanordnung (1) nach Anspruch 1 mit einem Gehäuse (3), bei welchem sowohl die Aussparung (52) für den Vorsprung (50) als auch der Vorsprung (50) selbst jeweils im radialen Außenbereich des Gehäuses (3) und jeweils an einem dem jeweils anderen Gehäuseteil (5, 6) zugewandten axialen Ende eines Gehäuseteils (5, 6) vorgesehen sind, wobei der den Vorsprung (50) aufweisende Gehäuseteil (5) an der radialen Innenseite des die Aussparung (52) aufweisenden Gehäuseteils (6) in Anlage kommt, **dadurch gekennzeichnet, dass** der Tilgermassenträger (44) mit zumindest einem Tilgermassenträgerelement (42; 42', 43) ausgebildet ist, und bei Eingriff des Tilgermassenträgers (44) in die Aussparung (52) des dieselbe aufweisenden Gehäuseteils (6) sich mit seiner dem Vorsprung (50) des anderen Gehäuseteils (5) zugewandten Seite an diesem Vorsprung (50) und/oder mit einer von dem Vorsprung (50) abgewandten Seite an der der Aussparung (52) zugeordneten Axialsicherung (70) abstützt, während die Beaufschlagung durch die Spannvorrichtung (76) an der von der Abstützstelle jeweils abgewandten Seite erfolgt.

3. Kupplungsanordnung (1) nach Anspruch 2 mit einem Tilgermassenträger (44), der über eine Mehrzahl von Tilgermassenträgerelementen (42; 42', 43) verfügt, **dadurch gekennzeichnet, dass** die Tilgermassenträgerelemente (42; 42', 43) in die Aussparung (52) des dieselbe aufweisenden Gehäuseteils (6) eingreifen, wobei ein Tilgermassenträgerelement (42') an der der Aussparung (52) des einen Gehäuseteils (6) zugeordneten Axialsicherung (70) abgestützt ist, und ein weiteres Tilgermassenträgerelement (42) an dem Vorsprung (50) des anderen Gehäuseteils (5), während die von der Axialsicherung (70) abgewandte Seite des einen Tilgermassenträgerelementes (42) sowie die vom Vorsprung (50) abgewandte Seite des weiteren Tilgermassenträgerelementes (43) jeweils durch die Spannvorrichtung (76) beaufschlagt ist, die sich axial zwischen den beiden Tilgermassenträgerelementen (42, 43) befindet.

4. Kupplungsanordnung (1) nach Anspruch 2 mit einem Tilgermassenträger (44), der über eine Mehrzahl von Tilgermassenträgerelementen (42; 42', 43) verfügt, **dadurch gekennzeichnet, dass** die Tilgermassenträgerelemente (42; 42', 43) in die Aussparung (52) des dieselbe aufweisenden Gehäuseteils (6) eingreifen, wobei ein erstes Tilgermassenträgerelement (42') an der Axialsicherung (70) dieser Aussparung (52) abgestützt ist, und ein weiteres Tilgermassenträgerelement (43) an dem ersten Tilgermassenträgerelement (42'), während die von dem ersten Tilgermassenträgerelement (42') abgewandte Seite des zweiten Tilgermassenträgerelementes (43) durch die Spannvorrichtung (76) beaufschlagt ist, die an dem Vorsprung (50) des anderen Gehäuseteils (5) abgestützt ist.

5. Kupplungsanordnung (1) nach Anspruch 2, **dadurch gekennzeichnet, dass** die Spannvorrichtung (76) an der der Aussparung (52) des einen Gehäuseteils (6) zugeordneten Axialsicherung (70) abgestützt ist, und das Tilgermassenträgerelement (43) an dessen von dem Vorsprung (50) des anderen Gehäuseteils (5) abgewandter Seite beaufschlagt, während das Tilgermassenträgerelement (43) mit seiner diesem Vorsprung (50) zugewandter Seite an diesem Vorsprung (50) abgestützt ist.

6. Kupplungsanordnung (1) nach Anspruch 2, **dadurch gekennzeichnet, dass** das Tilgermassenträgerelement (43) an der der Aussparung (52) des einen Gehäuseteils (6) zugeordneten Axialsicherung (70) abgestützt ist, und durch die Spannvorrichtung (76) beaufschlagt ist, die am Vorsprung (50) des anderen Gehäuseteils (5) abgestützt ist.

7. Kupplungsanordnung (1) nach Anspruch 1, **dadurch gekennzeichnet, dass** die Spannvorrichtung (76) über eine Energiespeichereinrichtung (78) mit zumindest einem Energiespeicher (80) verfügt.

8. Kupplungsanordnung (1) nach Anspruch 7, **dadurch gekennzeichnet, dass** die Energiespeichereinrichtung (78) als Energiespeicher (80) zumindest eine Tellerfeder (81) aufweist.

9. Kupplungsanordnung (1) nach Anspruch 7, **dadurch gekennzeichnet, dass** die Energiespeichereinrichtung (78) als Energiespeicher (80) zumindest eine Wellfeder (82) aufweist.

10. Kupplungsanordnung (1) nach Anspruch 7, **dadurch gekennzeichnet, dass** die Energiespeichereinrichtung (78) mit einem Energiespeicherträger (84) versehen ist, der in Axialabstand zueinander angeordnete Energiespeicherträgerelemente (86a, 86b) aufweist, welche mit Axialverformungen 86a, 86b versehen sind, die zur in Achsrichtung sowie in Umfangsrichtung gesicherten Aufnahme zumindest eines Energiespeichers (80) vorgesehen sind.

11. Kupplungsanordnung (1) nach Anspruch 10, **dadurch gekennzeichnet, dass** der zumindest eine axial zwischen den Energiespeicherträgerelementen (86a, 86b) aufgenommene Energiespeicher (80) als Schraubendruckfeder (85) ausgebildet ist.

12. Kupplungsanordnung (1) nach Anspruch 11, **dadurch gekennzeichnet, dass** axial zwischen den Energiespeicherträgerelementen (86a, 86b) eine Mehrzahl an Schraubendruckfedern (85) aufgenommen ist, die zumindest im Wesentlichen mit gleichen Abständen in Umfangsrichtung zueinander angeordnet sind.

13. Kupplungsanordnung (1) nach Anspruch 3 oder 4, **dadurch gekennzeichnet, dass** zumindest zwei Tilgermassenträgerelemente (42', 43) des Tilgermassenträgers (44) radial über die zumindest eine Tilgermasse (45) hinausragen, von denen zumindest ein Tilgermassenträgerelement (42') an seiner radialen Außenseite eine auf das jeweils andere Tilgermassenträgerelement (43) zugerichtete Kröpfung (47) verfügt.

14. Kupplungsanordnung (1) nach Anspruch 1, **dadurch gekennzeichnet, dass** die Festverbindung (74) zwischen den Gehäuseteilen (5, 6) mittels einer Schweißnaht (7) erfolgt.

## Claims

1. Clutch arrangement (1) having an absorber system (2) which has an absorber mass carrier (44) and at least one absorber mass (45) that can be deflected relative to the absorber mass carrier (44), and having a housing (3) which has at least two housing parts (5, 6) connected permanently to one another by means of a fixed connection (74), of which at least one housing part (6) has a cut-out (52) for at least one protrusion (50) of the respective other housing part (5), **characterized in that** the at least two housing parts (5, 6) are joined together while holding the absorber mass carrier (44) between an axial stop (70) of the cut-out (52) of the one housing part (6) and the protrusion (50) of the other housing part (5), specifically in such a way that, as the fixed connection (74) is produced, the housing parts (5, 6) are loaded by a clamping device (76) which acts on the housing parts (5, 6) in a direction pointing away from each other and which is effective axially between one of the housing parts (5, 6) and the absorber mass carrier (44), which is supported axially on the respective other housing part (5, 6).

2. Clutch arrangement (1) according to Claim 1, having a housing (3) in which both the cut-out (52) for the protrusion (50) and the protrusion (50) itself are each provided in the radial outer area of the housing (3) and each at an axial end of a housing part (5, 6) that faces the respective other housing part (5, 6), wherein the housing part (5) having the protrusion (50) comes into contact with the radial inner side of the housing part (6) having the cut-out (52), **characterized in that** the absorber mass carrier (44) is formed with at least one absorber mass absorber element (42; 42', 43) and, when the absorber mass carrier (44) engages in the cut-out (52) of the housing part (6) having the same, is supported with its side facing the protrusion (50) of the other housing part (5) on this protrusion (50) and/or with a side facing away from the protrusion (50) on the axial securing element (70) assigned to the cut-out (52), while the loading is applied by the clamping device (76) on the side respectively facing away from the supporting point.

3. Clutch arrangement (1) according to Claim 2, having an absorber mass carrier (44) which has a plurality of absorber mass carrier elements (42; 42', 43), **characterized in that** the absorber mass carrier elements (42; 42', 43) engage in the cut-out (52) of the housing part (6) having the same, wherein an absorber mass carrier element (42') is supported on the axial securing element (70) assigned to the cut-out (52) of the one housing part (6), and a further absorber mass carrier element (42) on the protrusion (50) of the other housing part (5), while the side of the one absorber mass carrier element (42) that faces away from the axial securing element (70), and the side of the further absorber mass carrier element (43) that faces away from the protrusion (50) are each acted on by the clamping device (76), which is located axially between the two absorber mass carrier elements (42, 43) .

4. Clutch arrangement (1) according to Claim 2, having an absorber mass carrier (44) which has a plurality of absorber mass carrier elements (42; 42', 43), **characterized in that** the absorber mass carrier elements (42; 42', 43) engage in the cut-out (52) of the housing part (6) having the same, wherein a first absorber mass carrier element (42') is supported on the axial securing element (70) of this cut-out (52), and a further absorber mass carrier element (43) on the first absorber mass carrier element (42'), while the side of the second absorber mass carrier element (43) that faces away from the first absorber mass carrier element (42') is acted on by the clamping device (76), which is supported on the protrusion (50) of the other housing part (5).

5. Clutch arrangement (1) according to Claim 2, **characterized in that** the clamping device (76) is supported on the axial securing element (70) assigned to the cut-out (52) of the one housing part (6), and acts on the absorber mass carrier element (43) on its side facing away from the protrusion (50) of the other housing part (5), while the absorber mass carrier element (43) is supported with its side facing this protrusion (50) on this protrusion (50).

6. Clutch arrangement (1) according to Claim 2, **characterized in that** the absorber mass carrier element (43) is supported on the axial securing element (70) assigned to the cut-out (52) of the one housing part (6) and is acted on by the clamping device (76), which is supported on the protrusion (50) of the other housing part (5).

7. Clutch arrangement (1) according to Claim 1, **characterized in that** the clamping device (76) has an energy storage device (78) with at least one energy store (80) .

8. Clutch arrangement (1) according to Claim 7, **characterized in that** the energy storage device (78) has at least one disc spring (81) as an energy store (80).

9. Clutch arrangement (1) according to Claim 7, **characterized in that** the energy storage device (78) has at least one wave spring (82) as an energy store (80).

10. Clutch arrangement (1) according to Claim 7, **characterized in that** the energy storage device (78) is provided with an energy store carrier (84), which has energy store carrier elements (86a, 86b) which are arranged at an axial distance from one another and which are provided with axial deformations (86a, 86b) which are provided to hold at least one energy store (80) in a manner secured in the axial direction and in the circumferential direction.

11. Clutch arrangement (1) according to Claim 10, **characterized in that** the at least one energy store (80) accommodated axially between the energy store carrier elements (86a, 86b) is formed as a helical compression spring (85).

12. Clutch arrangement (1) according to Claim 11, **characterized in that** a plurality of helical compression springs (85), which are arranged at least substantially at the same distances from one another in the circumferential direction, are arranged axially between the energy store carrier elements (86a, 86b).

13. Clutch arrangement (1) according to Claim 3 or 4, **characterized in that** at least two absorber mass carrier elements (42', 43) of the absorber mass carrier (44) project radially beyond the at least one absorber mass (45), of which at least one absorber mass carrier element (42') has on its radially outer side an angled portion (47) directed towards the respective other absorber mass carrier element (43).

14. Clutch arrangement (1) according to Claim 1, **characterized in that** the fixed connection (74) between the housing parts (5, 6) is made by means of a weld (7).

## Revendications

1. Agencement d'accouplement (1) comprenant un système amortisseur (2) qui dispose d'un support de masse d'amortissement (44) et d'au moins une masse d'amortissement (45) pouvant être déviée par rapport au support de masse d'amortissement (44), et comprenant un boîtier (3) qui présente au moins deux parties de boîtier (5, 6) reliées durablement l'une à l'autre au moyen d'une liaison fixe (74) dont au moins une partie de boîtier (6) présente un évidement (52) pour au moins une saillie (50) de l'autre partie de boîtier (5) respectivement,
**caractérisé en ce que** les au moins deux parties de boîtier (5, 6) sont assemblées en logeant le support de masse d'amortissement (44) entre une butée axiale (70) de l'évidement (52) de ladite une partie de boîtier (6) et la saillie (50) de l'autre partie de boîtier (5), notamment de telle sorte qu'au cours de l'établissement de la liaison fixe (74), les parties de boîtier (5, 6) sont chargées par un dispositif de serrage (76) sollicitant les parties de boîtier (5, 6) dans une direction opposée l'une à l'autre et agissant axialement entre l'une des parties de boîtier (5, 6) et le support de masse d'amortissement (44) qui prend appui axialement sur l'autre partie de boîtier (5, 6) respectivement.

2. Agencement d'accouplement (1) selon la revendication 1, comprenant un boîtier (3), dans lequel à la fois l'évidement (52) pour la saillie (50) et la saillie (50) elle-même sont prévus respectivement dans la zone extérieure radiale du boîtier (3) et respectivement à une extrémité axiale d'une partie de boîtier (5, 6), tournée respectivement vers l'autre partie de boîtier (5, 6), dans lequel la partie de boîtier (5) présentant la saillie (50) vient en butée contre la face intérieure radiale de la partie de boîtier (6) présentant l'évidement (52),
**caractérisé en ce que** le support de masse d'amortissement (44) est réalisé avec au moins un élément de support de masse d'amortissement (42 ; 42', 43), et lorsque le support de masse d'amortissement (44) vient en prise avec l'évidement (52) de la partie de boîtier (6) présentant celui-ci, il prend appui par sa face tournée vers la saillie (50) de l'autre partie de boîtier (5) sur cette saillie (50), et/ou il prend appui par une face détournée de la saillie (50) sur le blocage axial (70) associé à l'évidement (52) tandis que la sollicitation par le dispositif de serrage (76) intervient sur la face respectivement détournée du point d'appui.

3. Agencement d'accouplement (1) selon la revendication 2, comprenant un support de masse d'amortissement (44) qui dispose d'une pluralité d'éléments de support de masse d'amortissement (42 ; 42', 43), **caractérisé en ce que** les éléments de support de masse d'amortissement (42 ; 42', 43) viennent en prise avec l'évidement (52) de la partie de boîtier (6) qui présente celui-ci, dans lequel un élément de support de masse d'amortissement (42') prend appui sur le blocage axial (70) associé à l'évidement (52) de ladite une partie de boîtier (6), et un autre élément de support de masse d'amortissement (42) prend appui sur la saillie (50) de l'autre partie de boîtier (5) tandis que la face, détournée du blocage axial (70), dudit un élément de support de masse d'amortissement (42) ainsi que la face, détournée de la saillie (50), de l'autre élément de support de masse d'amortissement (43) sont sollicitées respectivement par le dispositif de serrage (76) qui se trouve axialement entre les deux éléments de support de masse d'amortissement (42, 43).

4. Agencement d'accouplement (1) selon la revendication 2, comprenant un support de masse d'amortissement (44) qui dispose d'une pluralité d'éléments de support de masse d'amortissement (42 ; 42', 43), **caractérisé en ce que** les éléments de support de masse d'amortissement (42 ; 42', 43) viennent en prise avec l'évidement (52) de la partie de boîtier (6) présentant celui-ci, dans lequel un premier élément de support de masse d'amortissement (42') prend appui sur le blocage axial (70) de cet évidement (52), et un autre élément de support de masse d'amortissement (43) prend appui sur le premier élément de support de masse d'amortissement (42') tandis que la face, détournée du premier élément de support de masse d'amortissement (42'), du deuxième élément de support de masse d'amortissement (43) est sollicitée par le dispositif de serrage (76) qui prend appui sur la saillie (50) de l'autre partie de boîtier (5).

5. Agencement d'accouplement (1) selon la revendication 2, **caractérisé en ce que** le dispositif de serrage (76) prend appui sur le blocage axial (70) associé à l'évidement (52) de ladite une partie de boîtier (6) et sollicite l'élément de support de masse d'amortissement (43) sur sa face détournée de la saillie (50) de l'autre partie de boîtier (5) tandis que l'élément de support de masse d'amortissement (43) prend appui sur cette saillie (50) par sa face tournée vers ladite saillie (50).

6. Agencement d'accouplement (1) selon la revendication 2, **caractérisé en ce que** l'élément de support de masse d'amortissement (43) prend appui sur le blocage axial (70) associé à l'évidement (52) de ladite une partie de boîtier (6) et est sollicité par le dispositif de serrage (76) qui prend appui sur la saillie (50) de l'autre partie de boîtier (5).

7. Agencement d'accouplement (1) selon la revendication 1, **caractérisé en ce que** le dispositif de serrage (76) dispose d'un moyen d'accumulation d'énergie (78) doté d'au moins un accumulateur d'énergie (80).

8. Agencement d'accouplement (1) selon la revendication 7, **caractérisé en ce que** le moyen d'accumulation d'énergie (78) présente au moins un ressort à disques (81) comme accumulateur d'énergie (80).

9. Agencement d'accouplement (1) selon la revendication 7, **caractérisé en ce que** le moyen d'accumulation d'énergie (78) présente au moins un ressort ondulé (82) comme accumulateur d'énergie (80).

10. Agencement d'accouplement (1) selon la revendication 7, **caractérisé en ce que** le moyen d'accumulation d'énergie (78) est muni d'un support d'accumulateur d'énergie (84) qui présente des éléments de support d'accumulateur d'énergie (86a, 86b) disposés à une distance axiale les uns par rapport aux autres et qui sont munis de formations axiales (86a, 86b) qui sont prévues pour loger au moins un accumulateur d'énergie (80) de manière sécurisée dans la direction axiale et dans la direction circonférentielle.

11. Agencement d'accouplement (1) selon la revendication 10, **caractérisé en ce que** ledit au moins un accumulateur d'énergie (80) logé axialement entre les éléments de support d'accumulateur d'énergie (86a, 86b) est réalisé sous forme de ressort de compression hélicoïdal (85).

12. Agencement d'accouplement (1) selon la revendication 11, **caractérisé en ce qu'**entre les éléments de support d'accumulateur d'énergie (86a, 86b), une pluralité de ressorts de compression hélicoïdaux (85) est logée axialement qui sont disposés les uns par rapport aux autres au moins substantiellement de manière équidistante dans la direction circonférentielle.

13. Agencement d'accouplement (1) selon la revendication 3 ou 4, **caractérisé en ce qu'**au moins deux éléments de support de masse d'amortissement (42', 43) du support de masse d'amortissement (44) dépassent radialement de ladite au moins une masse d'amortissement (45) dont au moins un élément de support de masse d'amortissement (42') dispose sur sa face extérieure radiale d'un coude (47) dirigé vers l'autre élément de support de masse d'amortissement (43) respectivement.

14. Agencement d'accouplement (1) selon la revendication 1, **caractérisé en ce que** la liaison fixe (74) entre les parties de boîtier (5, 6) est effectuée au moyen d'une soudure (7).
